# EUROPEAN PATENT APPLICATION

(11) **EP 4 807 555 A1**
(43) Date of publication of application: **16.09.2026**
(21) Application number: 25215236.8
(22) Date of filing: 12.11.2025
(51) Int. Cl.: G06F 9/54, G06F 16/904, G06N 3/04, G06N 3/08, G06N 3/09, H04L 41/16, G06F 21/50

(54) **AUTOMATICALLY DETECTING INSTANCES IMPACTED BY NETWORK EVENTS USING A MACHINE LEARNING MODEL**

(30) Priority: 11.03.2025 US 202519076885
(71) Applicant: Lemon Inc., Grand Cayman, KY1-1205 (KY)
(72) Inventor: Tao, Jinxin, Los Angeles, California, 90066 (US); Wang, Xin, Los Angeles, California, 90066 (US); Song, Jiayi, Los Angeles, California, 90066 (US); Pi, Jianwen, Los Angeles, California, 90066 (US); Ding, Xiaoning, Los Angeles, California, 90066 (US)
(74) Representative: Grünecker Patent- und Rechtsanwälte PartG mbB

(57) **Abstract**

A machine learning model receives sequences of time series data representing a plurality of instances associated with an event in a cloud network. Each sequence of time series data can be projected into a high-dimensional space. Positional encoding is performed to add positional information to each sequence of time series data. Spatial attention weights are distributed across different timesteps in each sequence of time series data by the spatial attention layer to capture the local temporal structure of the sequence data. Context information encoding is performed on an output from the spatial attention layer by transformer encoder layers of the machine learning model. A representation of each sequence of time series data is generated based on outputs from the transformer encoder layers for predicting a probability that each instance is impacted by the event.

## Description

### BACKGROUND

Cloud networking serves as a fundamental building block for various cloud services. Cloud network events, such as network failures, can adversely affect various cloud networking instances. However, it can be difficult to quickly and accurately detect cloud networking instances that have been adversely affected by a network event.

### BRIEF DESCRIPTION OF THE DRAWINGS

The following detailed description may be better understood when read in conjunction with the appended drawings. For the purposes of illustration, there are shown in the drawings example embodiments of various aspects of the disclosure; however, the invention is not limited to the specific methods and instrumentalities disclosed.
FIG. 1 shows an example system for automatically detecting instances impacted by network events using a machine learning model in accordance with the present disclosure.
FIG. 2 shows an example system for fetching data from an original data source in accordance with the present disclosure.
FIG. 3 shows an example data cache layer in accordance with the present disclosure.
FIG. 4 shows an example machine learning model in accordance with the present disclosure.
FIG. 5 shows example results generated by a machine learning model in accordance with the present disclosure.
FIG. 6 shows an example system for training a machine learning model to automatically detect instances impacted by network events in accordance with the present disclosure.
FIG. 7 shows example labeled data in accordance with the present disclosure.
FIG. 8 shows an example process for automatically detecting instances impacted by network events using a machine learning model in accordance with the present disclosure.
FIG. 9 shows an example process for training a machine learning model on a labeled training dataset in accordance with the present disclosure.
FIG. 10 shows an example process for fetching data in accordance with the present disclosure.
FIG. 11 shows example evaluation results in accordance with the present disclosure.
FIG. 12 shows an example computing device which may be used to perform any of the techniques disclosed herein.

### DETAILED DESCRIPTION OF ILLUSTRATIVE EMBODIMENTS

In public cloud architecture, cloud networking serves as the fundamental building block of cloud services. Various types of network events (e.g., incidents) can affect the cloud networking instances. Such network events can include, for example, network failures, application programming interface (API) access delay anomalies, database access anomalies, and/or any other network incident or change to the network. When such network events occur, it is critical to quickly and accurately assess the scope of the impact, notify the affected tenant in a timely manner, and assist them in migrating services to minimize service disruption and improve customer satisfaction. For example, network experts can compare traffic patterns in each network traffic time series before and after a network event start time to determine if the traffic was impacted by the incident. However, on the public cloud scale, the quantity of cloud networking instances can range from tens of thousands to hundreds of thousands in a single data center, making it impossible to manually identify each impacted instance. Thus, an effective classification model that can accurately identify instances impacted by network events based on traffic time series data is needed.

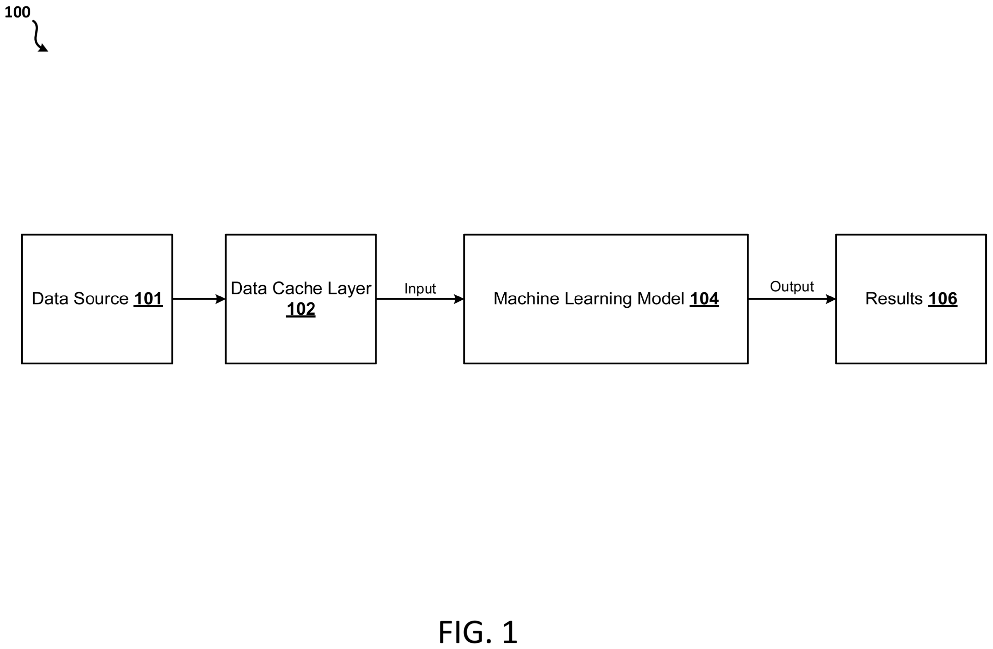

Described herein are techniques for automatically detecting instances impacted by network events using a machine learning model. FIG. 1 shows an example system 100 for automatically detecting instances impacted by network events using a machine learning model. The system 100 can comprise at least one data source 101, a data cache layer 102 and a machine learning model 104.

The network events can include, for example, network failure events. The network events can include API access delay anomalies. The system 100 can be used to detect API access delay anomalies through identifying unusual patterns, like significant increases in delay times caused by business-related issues, such as unexpected workload surges or resource bottlenecks. The system 100 can enable early detection of potential service performance issues to ensure timely intervention and maintain service quality. The network events can include database access anomalies. The system 100 can be used to detect database access anomalies by identifying unusual latency patterns, such as significant spikes in query time. These anomalies can result from issues like network congestion, database server overload, or resource contention. The system 100 can enable early detection of potential database performance issues to ensure prompt intervention and maintain optimal system performance.

The at least one data source 101 can comprise a time series database. The at least one data source 101 can store time series data. The data cache layer 102 can retrieve the plurality of time series data from the at least one data source 101. The data cache layer 102 can reformat the fetched data to generate a plurality of sequences of time series data. The machine learning model 104 can receive data from the data cache layer 102. The data received by the machine learning model 104 from the data cache layer 102 may comprise the plurality of sequences of time series data. The plurality of sequences of time series data can represent a plurality of instances associated with a network event in a cloud network. Each of the plurality of instances can include a cloud gateway instance (e.g., a load balancer instances, network address translation (NAT) instance, elastic IP address (EIP) instance, etc.) Each sequence of time series data among the plurality of sequences of time series data can include data recorded every interval (e.g., every 10 seconds, every 30 seconds, every 60 seconds, etc.) from a first time point until a second time point. The first time point can occur prior to the network event (e.g., 30 minutes prior to the network event), and the second time point can occur after the network event (e.g., 30 minutes after the network event).

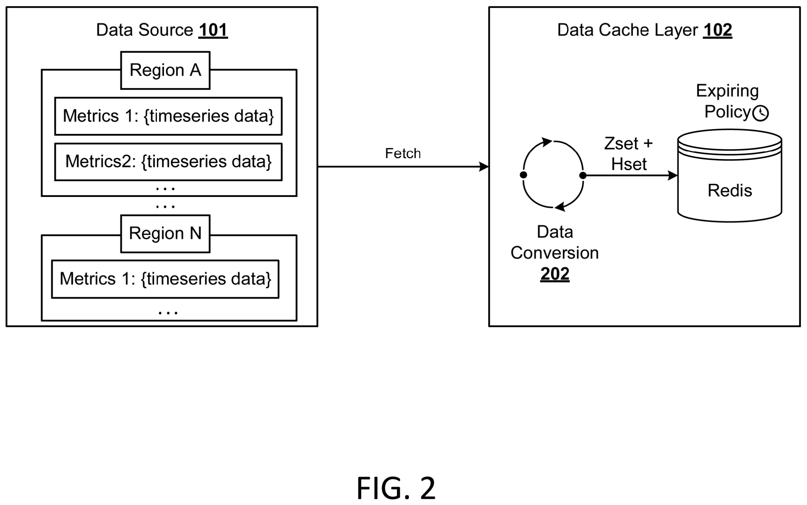

Inference speed can be crucial for promptly delivering impacted instance results. Accessing raw data directly from a time series database (e.g., the at least one data source 101) can be inefficient. As shown in the example of FIG. 2, the data cache layer 102 can reformat the raw data in a more fetch-friendly way, so that future requested data can be more efficiently pulled from the data cache layer, instead of from the original time series database, to speed up the inference process.

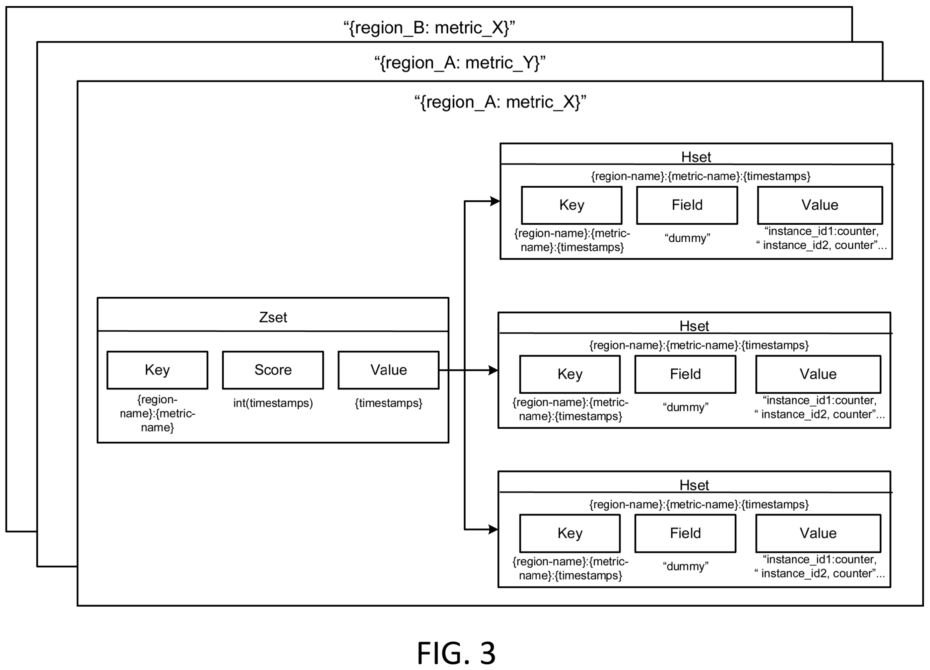

As shown in the example of FIG. 2, the at least one data source 101 can be associated with a plurality of regions with different metrics. The data cache layer 102 can perform a data conversion 202 on the data fetched from the data source 101 to reformat the fetched data. Reformatting the fetched data may comprise generating the plurality of sequences of time series data. The data cache layer 102 can store the plurality of sequences of time series data. As shown in the example of FIG. 3, the data cache layer 102 can leverages built-in data structures, such as Zset and Hset. To support multiple regions with different metrics, the Zset value can be set as {region-name}: {metric-name} : {timestamps} to ensure uniqueness. In the Hset, the key can be the timestamp, while the value contains all the instance metric data for a particular region and metric. The machine learning model 104 can retrieve the generated plurality of sequences of time series data from the data cache layer 102.

Fetching data from data cache layer 102, as opposed to fetching data directly from data source 101 significantly reduces the time it takes in between fetching data and the data being fed into the machine learning model 104. For example, the fetch time for fetching one hour of data for 33,000 instances from the time series database was compared to the fetch time using the data cache layer 102. Using the data cache layer 102 for fetching reduced the fetch time from 64 seconds to 1.28 seconds.

Referring back to FIG. 1, the machine learning model 104 can process the data corresponding to the plurality of instances that need to be tested to automatically detect which instances among the plurality of instances were impacted by the network event in the cloud network. The machine learning model 104 can be a classification model that is trained for impacted instance detection. The machine learning model 104 can be trained to differentiate between impacted and non-impacted data patterns after each of different types of network incidents for impacted instance detection. The machine learning model 104 can be configured to perform both context learning (e.g., capturing dependencies between elements in the input sequence, providing a comprehensive intrinsic representation of the entire sequence) and local temporal structure learning (e.g., extracting local pattern characteristics that linked to their temporal positions).

The machine learning model 104 can include a linear projection layer configured for feature embedding and a positional encoding layer configured to add positional information to each time series sequence. Each resulted time series sequence with the positional information can be input into a spatial attention layer of the machine learning model 104. The spatial attention layer can distribute spatial attention weights across different timesteps in each sequence of time series data. Distributing the spatial attention weights across different timesteps in each sequence of time series data can enable the machine learning model 104 to jointly capture both the pattern information and their temporal position information.

The machine learning model 104 can perform context information encoding on an output from the spatial attention layer. The context information encoding can be performed by transformer encoder layers of the machine learning model 104. The context information encoding can enable the machine learning model 104 to capture relationships between different elements of each sequence of time series data via a self-attention mechanism. The ability of the transformer encoder layers to capture long-range dependencies through direct connections via the self-attention mechanism enables the transformer encoder layers to encode long time series data context information.

The machine learning model 104 can generate a representation of each sequence of time series data from the transformer encoder layers. The representations can be used for predicting a probability that each instance is impacted by the network event by further processing the representations through a mean pooling layer, drop out layer, and a fully connected layer. The machine learning model 104 can generate and output results 106. The results 106 can indicate a confidence score (e.g., a percentage) for each instance can be generated. The confidence score can correspond to the representation of each sequence of time series data. The confidence score for a particular instance indicates the probability that the instance is impacted by the network event, with a higher confidence score indicating a greater probability that the instance is impacted by the network event. The tenants associated with the instances that are likely to be impacted by the network event (e.g., having a confidence score that exceeds a predetermined threshold) can be notified and/or assisted with migrating services to minimize service disruption and improve customer satisfaction.

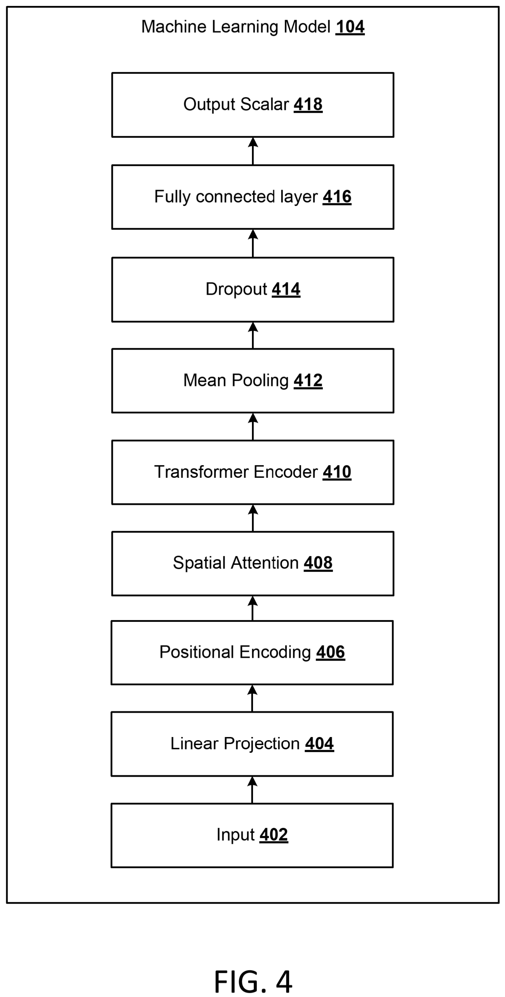

FIG. 4 shows the machine learning model 104 in more detail. The machine learning model 104 can be integrated into an impact instance detection system to automate the detection process. The machine learning model includes a linear projection layer 404, a positional encoding layer 406, a spatial attention layer 408, transformer encoder layers 410, a mean pooling layer 412, a dropout layer 414, and a fully connected layer 416. The machine learning model 104 can receive input 402. The input 402 can include instance time series data (e.g., reformatted instance time series data). The linear projection layer 404 can project each element of the time series to a high-dimensional feature space. Projecting each sequence of time series data into the high-dimensional space can enrich the representation of each value, reflecting its nuanced meaning within different contexts of the input sequence. The positional encoding layer 406 can then perform positional encoding on the whole series to capture positional information. Encoding positional information into each embedded sequence can help the machine learning model understand the position of each value.

Each resulted sequence of time series data with the positional information can be input into the spatial attention layer 408. The spatial attention layer 408 can distribute spatial attention weights across different timesteps in each sequence of time series data. Distributing the spatial attention weights across different timesteps in each sequence of time series data can enable the machine learning model 104 to capture the local temporal structure of the sequence data. The spatial attention layer 408 enables the machine learning model 104 to jointly capture both the pattern information and their temporal position information.

The transformer encoder layers 410 can perform context information encoding on an output from the spatial attention layer 408. The context information encoding can enable the machine learning model 104 to generate a comprehensive intrinsic representation of the entire sequence. The transformer encoder layers 410 can include a plurality of transformer encoder layers. The plurality of transformer encoder layers can help in capturing the dependencies and interactions between different elements of the sequence. The ability of the transformer encoder layers to capture long-range dependencies through direct connections via the self-attention mechanism enables the transformer encoder layers 410 to encode long time series data context information. The mean pooling layer 412 can average the output of the transformer encoder layers 410 over the sequence length to form an aggregated representation (e.g., vector). The aggregated vector can be passed into a dropout layer 414 followed by a dense layer (e.g., fully connected layer 416). The output of the dense layer can be a scalar 418. The scalar 418 can be transformed into a probability value indicating the probability that the instance is impacted by the network event using an activation function.

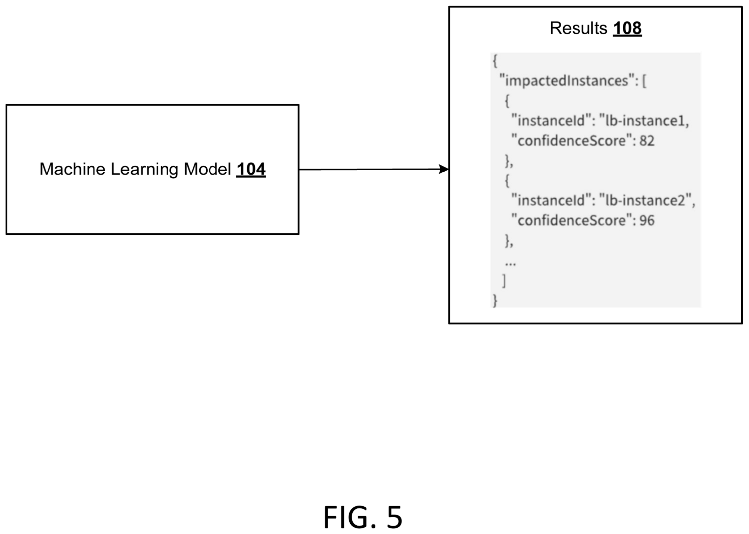

FIG. 5 shows example results 106 output by the machine learning model 104. As shown in the example of FIG. 5, the results 106 can include a list of impacted instances (e.g., instances that are likely to have been impacted by the network event). The results 106 can include an instance identification corresponding to each impacted instance. The results 106 can include a confidence score associated with each impacted instance. For example, the results 106 in FIG. 5 show that the instance having an instance identification of "lb-instance1" is 82% likely to have been impacted by the network event, and that the instance having an instance identification of "lb-instance2" is 96% likely to have been impacted by the network event. The tenants associated with the instances that are likely to be impacted by the network event can be notified and/or assisted with migrating services to minimize service disruption and improve customer satisfaction.

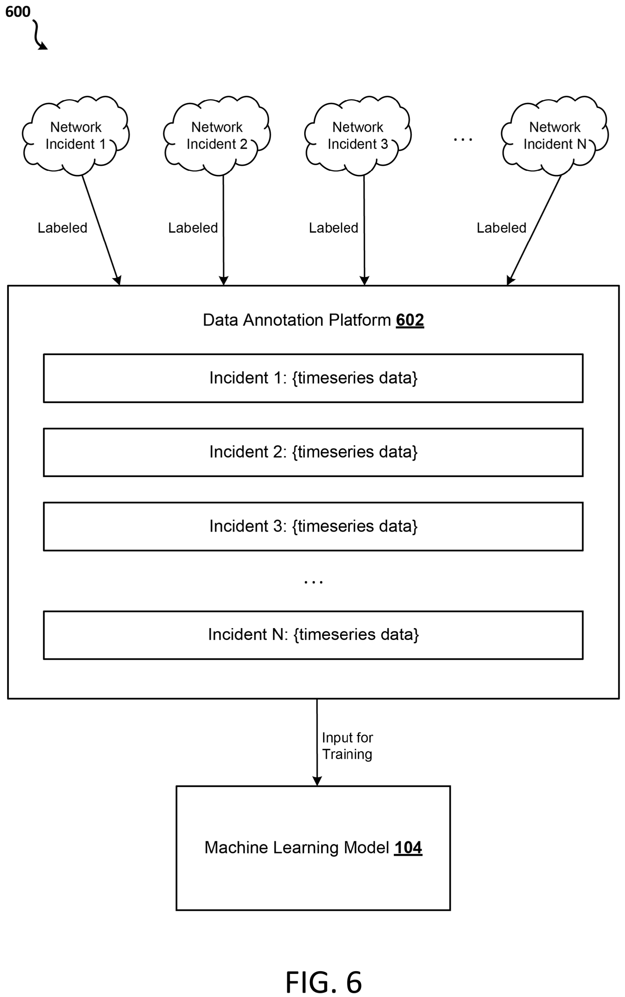

The machine learning model 104 can be trained using labeled instance time series traffic data. As shown in the system 600 of FIG. 6, a data annotation platform 602 can provide a repository of labeled datasets based on historical network incidents, thereby facilitating the creation, management, and storage of annotated data to support model training and performance evaluation. For example, the data annotation platform 602 can receive, from a plurality of network instances, labeled instance time series traffic data. The labeled instance time series traffic data can be derived from a plurality of recent network events of different types.

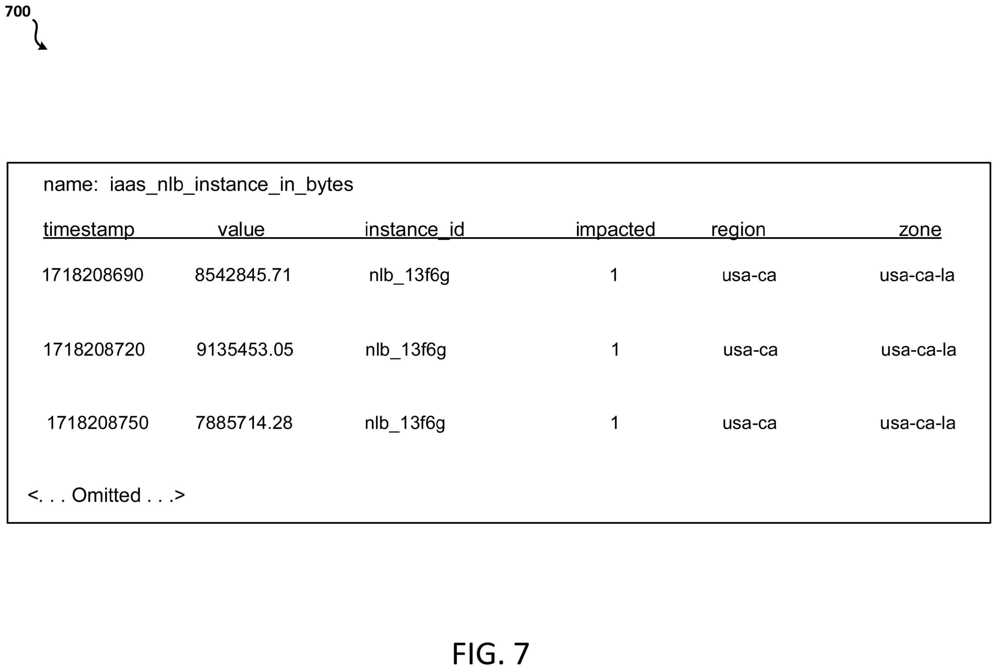

For each instance, the time series data can include 30 minutes (at 30-second intervals) prior to the failure and 10 minutes after the failure began. Thus, the machine learning model 104, when trained on such data, can be exposed to pattern information both before and after network failure, while remaining practical for real-world data collection and enabling rapid analysis. FIG. 7 shows an example set 700 of labeled instance time series traffic data associated with a particular instance. As shown in FIG. 7, the traffic time series data for the instance is recorded at 30-second intervals. The "impacted" field indicates whether the instance was affected by the incident, where 0 represents "not impacted" and 1 represents "impacted."

The labeled instance time series traffic data can be partitioned into two sets: training data, used for model training, and test data, used for evaluating model performance. The training dataset and the testing dataset can each include data from different network failures from different regions. The machine learning model 104 can be trained by minimizing binary cross-entropy during the training process. For hyperparameter tuning, a grid search can be performed for each hyperparameter set. The training of the machine learning model 104 can be performed, for example, by a server.

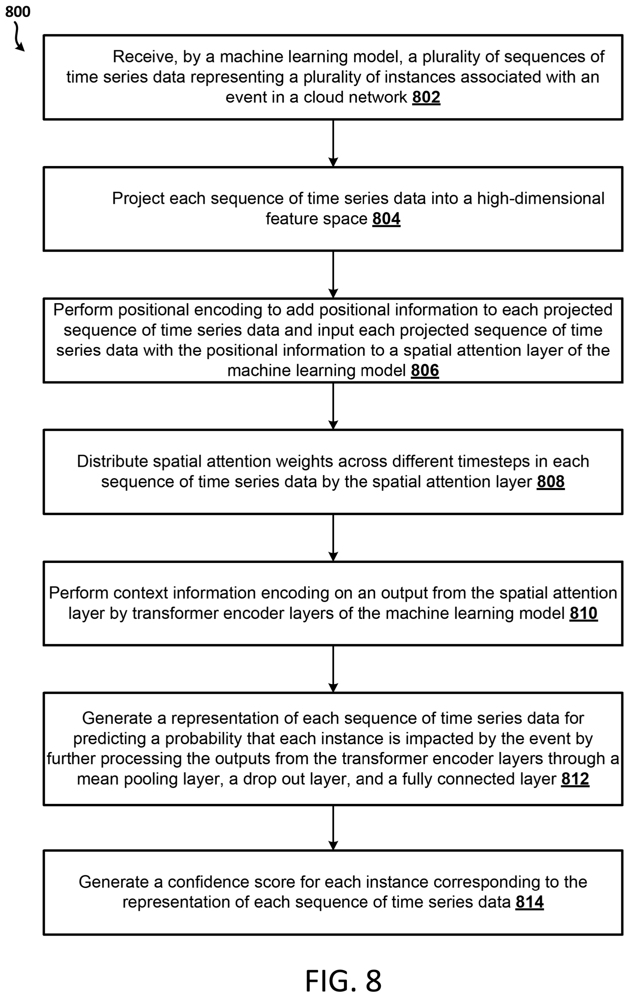

FIG. 8 shows an example process 800 for automatically detecting instances impacted by network events using a machine learning model. Although depicted as a sequence of operations in FIG. 8, those of ordinary skill in the art will appreciate that various embodiments may add, remove, reorder, or modify the depicted operations.

At 802, a plurality of sequences of time series data can be input into a machine learning model (e.g., machine learning model 104). The plurality of sequences of time series data can represent a plurality of instances associated with a network event in a cloud network. At 804, each sequence of time series data can be projected into a high-dimensional feature space by a linear projection layer (e.g., the linear projection layer 404). Projection of each sequence of time series data into the high-dimensional space can enrich the representation of each value, reflecting its nuanced meaning within different contexts of the input sequence.

At 806, positional encoding can be performed. The positional encoding can be performed to add positional information to each projected sequence of time series data. Each projected sequence of time series data with the positional information can be input to a spatial attention layer (e.g., spatial attention layer 408) of the machine learning model. At 808, spatial attention weights can be distributed (e.g., assigned) across different timesteps in each sequence of time series data by the spatial attention layer. Distributing the spatial attention weights across different timesteps in each sequence of time series data can enable the machine learning model to capture the local temporal structure of the sequence data. The spatial attention layer enables the machine learning model to jointly capture both the pattern information and their temporal position information.

At 810, context information encoding can be performed on an output from the spatial attention layer. The context information encoding can be performed by transformer encoder layers (e.g., transformer encoder layers 410) of the machine learning model. The context information encoding can be performed to generate a comprehensive intrinsic representation of the entire sequence. The ability of the transformer encoder layers to capture long-range dependencies through direct connections via the self-attention mechanism enables the machine learning model to encode long time series data context information.

At 812, a representation of each sequence of time series data can be generated. The representation of each sequence of time series data can be generated for predicting a probability that each instance is impacted by the network event by further processing the outputs from the transformer encoder layers through a mean pooling layer, drop out layer, and a fully connected layer. For example, the output of the transformer encoder layers can be averaged over the sequence length by the mean pooling layer to form an aggregated representation (e.g., vector). The aggregated vector can be passed into a drop out layer and, finally, a dense layer. The output of the dense layer can be a scalar (e.g., scalar 418). The scalar can be transformed into a probability value or confidence score indicating the probability that the instance is impacted by the network event using an activation function. At 814, a confidence score can be generated for each instance corresponding to the representation of each sequence of time series data. The confidence score indicates a probability that each instance is impacted by the network event.

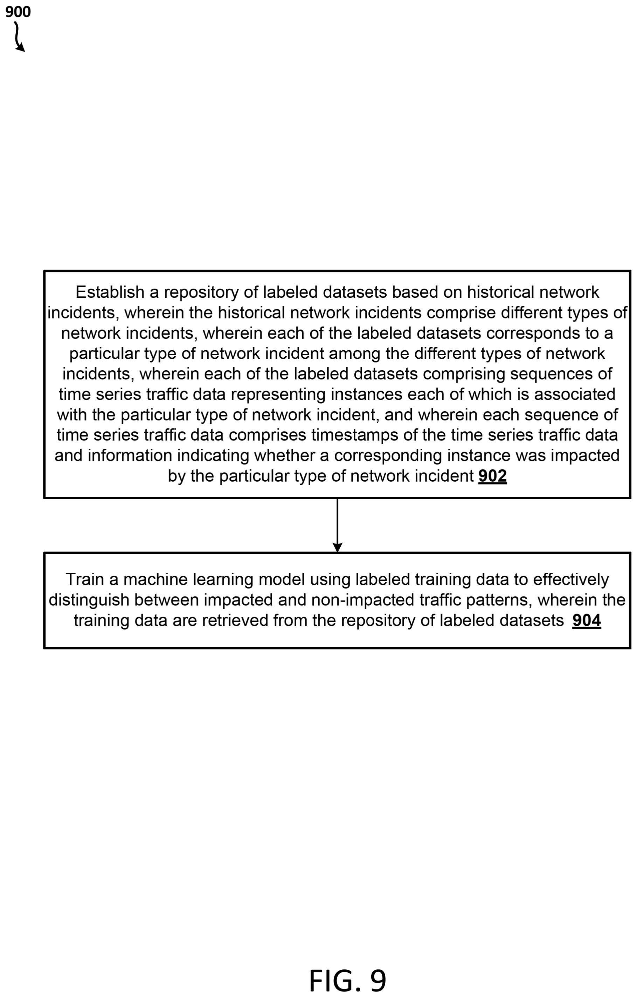

FIG. 9 shows an example process 900 for training a machine learning model to automatically detect instances impacted by network events. Although depicted as a sequence of operations in FIG. 9, those of ordinary skill in the art will appreciate that various embodiments may add, remove, reorder, or modify the depicted operations.

At 902, a repository of labeled datasets can be established based on historical network incidents. The historical network incidents can include different types of network incidents. Each of the labeled datasets can correspond to a particular type of network incident among the different types of network incidents. Each of the labeled datasets can include sequences of time series traffic data representing instances. Each instance can be associated with the particular type of network incident. Each sequence of time series traffic data can include timestamps of the time series traffic data and information indicating whether a corresponding instance was impacted by the particular type of network incident. At 904, a machine learning model can be trained on training data to differentiate between impacted and non-impacted data patterns. The training data can be retrieved from the repository of labeled datasets.

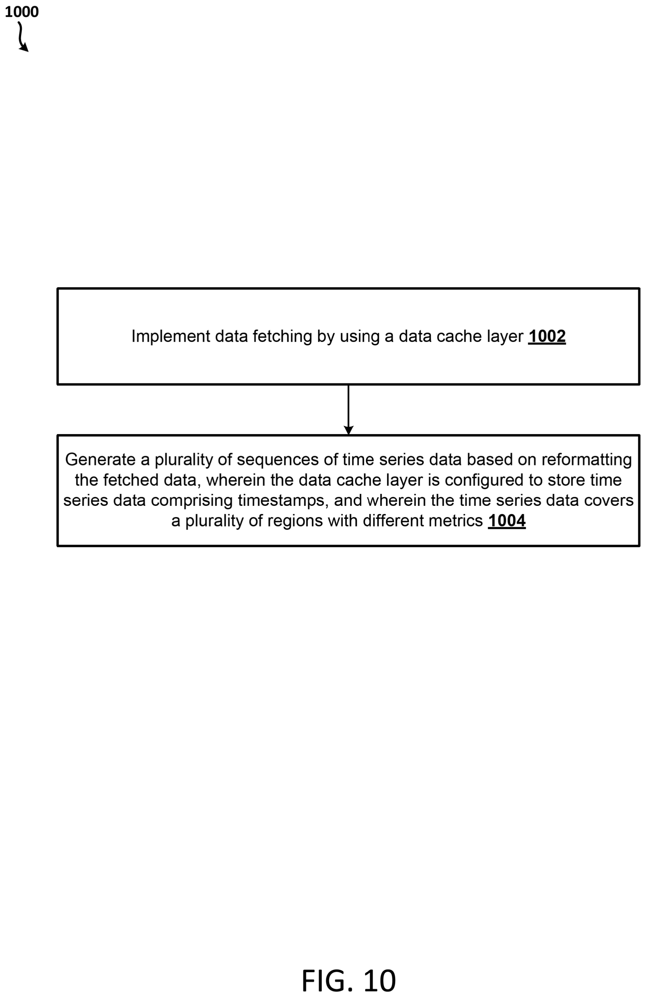

FIG. 10 shows an example process 1000 for fetching data. Although depicted as a sequence of operations in FIG. 10, those of ordinary skill in the art will appreciate that various embodiments may add, remove, reorder, or modify the depicted operations.

At 1002, data fetching can be implementing using a data caching layer (e.g., data cache layer 102). The data caching layer can fetch the data from at least one data source (e.g., the at least one data source 101) associated with a plurality of regions with different metrics. The data caching layer can be configured to reformat the raw data (e.g., data conversion 202) and save the reformatted, better-organized data. The saved reformatted data may enable better efficiency in the future when the data caching layer receives pull requests. For example, the saved reformatted data can enable the data caching layer to prepare the requested data faster and/or feed the data into the machine learning model for inference.

At 1004, a plurality of sequences of time series data can be generated. The plurality of sequences of time series data can be generated based on reformatting the fetched data. The data caching layer can be configured to store time series data comprising timestamps. The time series data can cover a plurality of regions with different metrics. The data caching layer can leverage built-in data structures, such as Zset and Hset. To support multiple regions with different metrics, the Zset value can be set as {region-name}: {metric-name}:{timestamps} to ensure uniqueness. In the Hset, the key can be the timestamp, while the value contains all the instance metric data for a particular region and metric. A machine learning model (e.g., the machine learning model 104) can retrieve the generated plurality of sequences of time series data from the data caching layer. Using the data caching layer for fetching data, as opposed to the machine learning model fetching the raw data directly from the at least one data source, significantly reduces data fetch time.

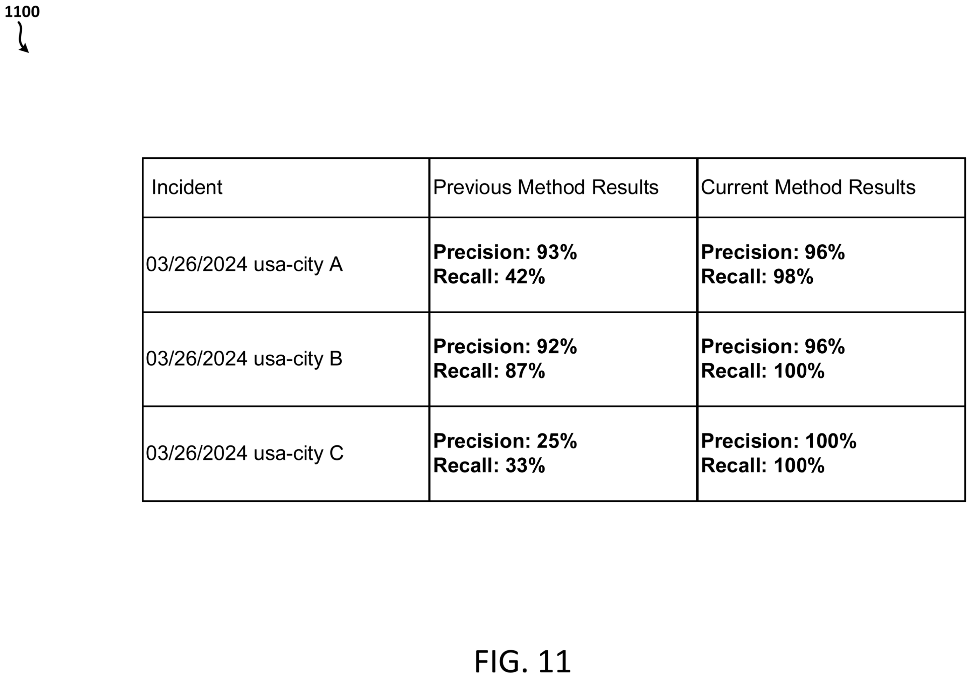

FIG. 11 shows example evaluation results 1100 in accordance with the present disclosure. The performance of the machine learning model 104 on four past incident datasets was evaluated using precision and recall as key metrics. These metrics offer insights into the model's performance in terms of how effectively it predicts both positive and negative instances. Here is a description of precision and recall based on the confusion matrix components: TP, TN, FP, and FN. TP (True Positive): the number of correctly predicted positive instances; TN (True Negative): the number of correctly predicted negative instances; FP (False Positive): the number of incorrectly predicted positive instances; FN (False Negative): the number of incorrectly predicted negative instances. Precision is the ratio of true positive predictions to the total number of positive predictions made by the model (both true and false positives), where Precision = TP/(FP + TP). Recall is the ratio of true positive predictions to the total number of actual positive instances (both true positives and false negatives), where Recall = TP/(TP + FN).

As shown in the results 1100, the machine learning model 104 significantly outperformed existing methods in terms of accuracy and responsiveness. The machine learning model 104 increases the precision rate from 75.75% to 96.75% and improves the recall rate from 59.5% to 98.75%. Additionally, the machine learning model 104 demonstrates strong performance consistency across various incidents compared to previous methods. Further, the machine learning model 104 provides results just a few minutes after incidents, significantly reducing the time compared to the manual process, which typically takes 15 to 30 minutes.

Due to the unique structure of the machine learning model 104, the final output remains largely unaffected by modifications at nearby non-critical timesteps, such as swapping the first and second input values. Any resulting difference in output metric (confidence score) is minimal and measurable (e.g., less than 0.0001). If a significant portion of the input values is altered positionally, such as by removing the first two values and appending two future values for an impacted instance, the results can differ significantly. This is because the timestamp of the true impact is now shifted and mismatches the learned spatial weights.

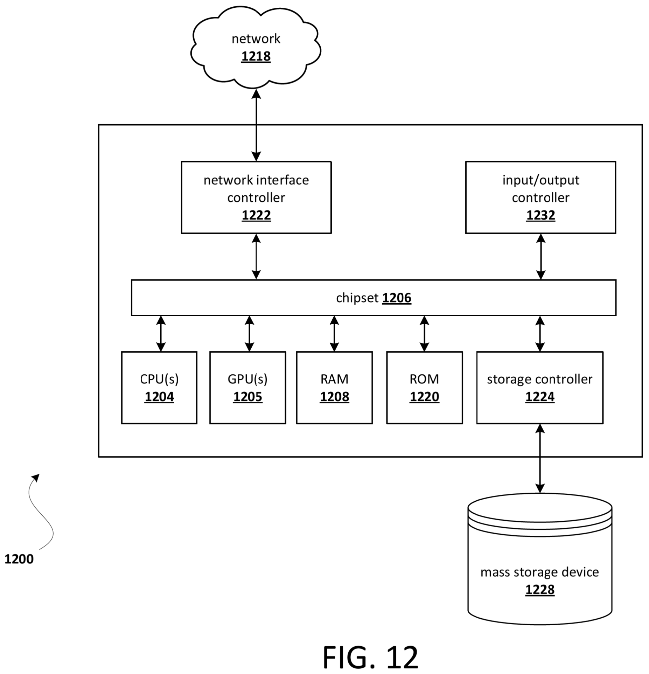

FIG. 12 illustrates a computing device that may be used in various aspects, such as the model(s), components, and/or devices depicted in FIGS. 1-6. With regard to FIGS. 1-6, any or all of the components may each be implemented by one or more instance of a computing device 1200 of FIG. 12. The computer architecture shown in FIG. 12 shows a conventional server computer, workstation, desktop computer, laptop, tablet, network appliance, PDA, e-reader, digital cellular phone, or other computing node, and may be utilized to execute any aspects of the computers described herein, such as to implement the methods described herein.

The computing device 1200 may include a baseboard, or "motherboard," which is a printed circuit board to which a multitude of components or devices may be connected by way of a system bus or other electrical communication paths. One or more central processing units (CPUs) 1204 may operate in conjunction with a chipset 1206. The CPU(s) 1204 may be standard programmable processors that perform arithmetic and logical operations necessary for the operation of the computing device 1200.

The CPU(s) 1204 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 1204 may be augmented with or replaced by other processing units, such as GPU(s) 1205. The GPU(s) 1205 may comprise processing units specialized for but not necessarily limited to highly parallel computations, such as graphics and other visualization-related processing.

A chipset 1206 may provide an interface between the CPU(s) 1204 and the remainder of the components and devices on the baseboard. The chipset 1206 may provide an interface to a random-access memory (RAM) 1208 used as the main memory in the computing device 1200. The chipset 1206 may further provide an interface to a computer-readable storage medium, such as a read-only memory (ROM) 1220 or non-volatile RAM (NVRAM) (not shown), for storing basic routines that may help to start up the computing device 1200 and to transfer information between the various components and devices. ROM 1220 or NVRAM may also store other software components necessary for the operation of the computing device 1200 in accordance with the aspects described herein.

The computing device 1200 may operate in a networked environment using logical connections to remote computing nodes and computer systems through local area network (LAN). The chipset 1206 may include functionality for providing network connectivity through a network interface controller (NIC) 1222, such as a gigabit Ethernet adapter. A NIC 1222 may be capable of connecting the computing device 1200 to other computing nodes over a network 1218. It should be appreciated that multiple NICs 1222 may be present in the computing device 1200, connecting the computing device to other types of networks and remote computer systems.

The computing device 1200 may be connected to a mass storage device 1228 that provides non-volatile storage for the computer. The mass storage device 1228 may store system programs, application programs, other program modules, and data, which have been described in greater detail herein. The mass storage device 1228 may be connected to the computing device 1200 through a storage controller 1224 connected to the chipset 1206. The mass storage device 1228 may consist of one or more physical storage units. The mass storage device 1228 may comprise a management component 1210. A storage controller 1224 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 1200 may store data on the mass storage device 1228 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 1228 is characterized as primary or secondary storage and the like.

For example, the computing device 1200 may store information to the mass storage device 1228 by issuing instructions through a storage controller 1224 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 1200 may further read information from the mass storage device 1228 by detecting the physical states or characteristics of one or more particular locations within the physical storage units.

In addition to the mass storage device 1228 described above, the computing device 1200 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 1200.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 1228 depicted in FIG. 12, may store an operating system utilized to control the operation of the computing device 1200. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 12228 may store other system or application programs and data utilized by the computing device 1200.

The mass storage device 1228 or other computer-readable storage media may also be encoded with computer-executable instructions, which, when loaded into the computing device 1200, transforms the computing device from a general-purpose computing system into a special-purpose computer capable of implementing the aspects described herein. These computer-executable instructions transform the computing device 1200 by specifying how the CPU(s) 1204 transition between states, as described above. The computing device 1200 may have access to computer-readable storage media storing computer-executable instructions, which, when executed by the computing device 1200, may perform the methods described herein.

A computing device, such as the computing device 1200 depicted in FIG. 12, may also include an input/output controller 1232 for receiving and processing input from a number of input devices, such as a keyboard, a mouse, a touchpad, a touch screen, an electronic stylus, or other type of input device. Similarly, an input/output controller 1232 may provide output to a display, such as a computer monitor, a flat-panel display, a digital projector, a printer, a plotter, or other type of output device. It will be appreciated that the computing device 1200 may not include all of the components shown in FIG. 12, may include other components that are not explicitly shown in FIG. 12, or may utilize an architecture completely different than that shown in FIG. 12.

As described herein, a computing device may be a physical computing device, such as the computing device 1200 of FIG. 12. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

The present methods and systems may be understood more readily by reference to the following detailed description of preferred embodiments and the examples included therein and to the Figures and their descriptions.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses, and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its operations be performed in a specific order. Accordingly, where a method claim does not actually recite an order to be followed by its operations or it is not otherwise specifically stated in the claims or descriptions that the operations are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a true scope and spirit being indicated by the following claims.

## Claims

1. A method of automatically detecting instances impacted by network events using a machine learning model, comprising:
receiving (802), by the machine learning model, a plurality of sequences of time series data representing a plurality of instances associated with an event in a cloud network;
projecting (804) each sequence of time series data into a high-dimensional feature space;
performing (806) positional encoding to add positional information to each sequence of time series data and inputting each sequence of time series data with the positional information to a spatial attention layer of the machine learning model;
distributing (808) spatial attention weights across different timesteps in each sequence of time series data by the spatial attention layer to capture local temporal structures of the sequence data;
performing (810) context information encoding on an output from the spatial attention layer by transformer encoder layers of the machine learning model to generate a comprehensive intrinsic representation of the entire sequence; and
generating (812) a representation of each sequence of time series data based on outputs from the transformer encoder layers for predicting a probability that each instance is impacted by the event.

2. The method of claim 1, further comprising:
generating (814) a confidence score for each instance corresponding to the representation of each sequence of time series data, wherein the confidence score indicates the probability that each instance is impacted by the event.

3. The method of claim 1, further comprising:
establishing (902) a repository of labeled datasets based on historical network incidents, wherein the historical network incidents comprise different types of network incidents, and wherein the each of the labeled datasets corresponds to a particular type of network incident among the different types of network incidents.

4. The method of claim 3, wherein each of the labeled datasets comprising sequences of time series traffic data representing instances each of which is associated with the particular type of network incident, and wherein each sequence of time series traffic data comprises timestamps of the time series traffic data and information indicating whether a corresponding instance was impacted by the particular type of network incident.

5. The method of claim 3, further comprising:
training (904) the machine learning model on training data to differentiate between impacted and non-impacted data patterns after each of the different types of network incidents, wherein the training data are retrieved from the repository of labeled datasets.

6. The method of claim 1, wherein each sequence of time series data comprises data recorded every interval from a first time point prior to the event to a second time point after the event.

7. The method of claim 1, further comprising:
implementing (1002) data fetching by using a data caching layer; and
generating (1004) the plurality of sequences of time series data based on reformatting the fetched data.

8. The method of claim 7, wherein the data caching layer is configured to store time series data comprising timestamps, and wherein the time series data covers a plurality of regions with different metrics.

9. The method of claim 1, wherein the event comprises a network failure event, and wherein predicting the probability that each instance is impacted by the event comprises analyzing a scope of the network failure event.

10. A system of automatically detecting instances impacted by network events using a machine learning model, comprising:
at least one processor; and
at least one memory communicatively coupled to the at least one processor and comprising computer-readable instructions that upon execution by the at least one processor cause the at least one processor to perform the method of any of claims 1-9.

11. A non-transitory computer-readable storage medium, storing computer-readable instructions that upon execution by a processor cause the processor to perform the method of any of claims 1-9.
